# EUROPEAN PATENT APPLICATION

(11) **EP 3 086 275 A1**
(43) Date of publication of application: **26.10.2016**
(21) Application number: 16165957.8
(22) Date of filing: 19.04.2016
(51) Int. Cl.: G06Q 30/06

(54) **NUMERICAL VALUE TRANSFER METHOD, TERMINAL, CLOUD SERVER, COMPUTER PROGRAM AND RECORDING MEDIUM**

(30) Priority: 21.04.2015 CN 201510189000
(71) Applicant: Xiaomi Inc., Beijing 100085 (CN)
(72) Inventor: JIANG, Lifeng, 100085 Haidian District (CN); JIANG, Bo, 100085 Haidian District (CN); LI, Feng, 100085 Haidian District (CN)
(74) Representative: Robson, Aidan John

(57) **Abstract**

This disclosure relates to a numerical value transfer method, a terminal, a cloud server, a computer program and a recording medium. The method comprises: receiving (101) a numerical value transfer request sent by a terminal, the numerical value transfer request carrying user characteristic information, a user account being currently login of the terminal and a target numerical value of the numerical value transfer being currently performed, the user characteristic information being obtained by characteristic extraction from a target image in the terminal; acquiring credit information (102) and historical numerical value transfer record of a user based on the user characteristic information and the user account; and performing (103) numerical value transfer based on the credit information, the historical numerical value transfer record and the target numerical value. By extracting the user characteristic information of the target image, this disclosure saves the user from manually inputting account number and password for performing numerical value transfer with easy operations and enhances the security for numerical value transfer.

## Description

### TECHNICAL FIELD

The present disclosure generally relates to the field of Internet, and more particularly, relates to a numerical value transfer method, a terminal, a cloud server, a computer program and a recording medium.

### BACKGROUND

Since smart TVs have fully open platforms and are equipped with operating systems, a user can install or uninstall applications by self. Therefore, the smart TVs are becoming more popular and gradually replacing the traditional TVs. In addition, with the popularity of network transaction, the methods of network transaction performed through smart TVs are gaining more attention. At the present time, in the related arts, when performing network transaction through smart TVs, numerical value transfer of virtual or real currency is usually involved to some extent. When performing numerical value transfer, a user usually needs to manually input his or her account number and account password for the numerical value transfer to a smart TV so as to complete the numerical value transfer. However, when the user manually inputs his or her account number and account password for numerical value transfer, the operations are relatively complex and the security of numerical value transfer is poor.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

To overcome the above problems in the related arts, the present disclosure provides a numerical value transfer method, a terminal, a cloud server, a computer program and a recording medium.

According to a first aspect of embodiments of the present disclosure, there is provided a numerical value transfer method, comprising:
receiving a numerical value transfer request sent by a terminal, the numerical value transfer request carrying user characteristic information, a user account being currently login of the terminal and a target numerical value of the numerical value transfer being currently performed, the user characteristic information being obtained by characteristic extraction from a target image in the terminal;
acquiring credit information and historical numerical value transfer record of a user based on the user characteristic information and the user account; and
performing numerical value transfer based on the credit information, the historical numerical value transfer record and the target numerical value.

With reference to the first aspect, in a first possible embodiment of the first aspect, performing numerical value transfer based on the credit information, the historical numerical value transfer record and the target numerical value comprises:
determining a credit amount of the user based on the credit information and the historical numerical value transfer record;
acquiring at least one frequently used address information from a stored corresponding relation between the user account and the frequently used address information based on the user account;
sending the at least one frequently used address information to the terminal so that the terminal displays the same; and
performing numerical value transfer based on the credit amount, a remaining numerical value of the user account, the target numerical value and a remaining numerical value of a cloud server when target address information sent by the terminal based on the at least one frequently used address information is received, the target address information being address information of the numerical value transfer being currently performed.

With reference to the first possible embodiment of the first aspect, in a second possible embodiment of the first aspect, performing numerical value transfer based on the credit amount, the remaining numerical value of the user account, the target numerical value and the remaining numerical value of the cloud server comprises:
when the remaining numerical value of the user account is greater than or equal to the target numerical value, deducting the target numerical value from the remaining numerical value of the user account, and adding the deducted target numerical value to the remaining numerical value of the cloud server;
when the remaining numerical value of the user account is less than the target numerical value, determining if the credit amount is greater than the target numerical value;
when the credit amount is greater than the target numerical value, calculating a difference between the remaining numerical value of the user account and the target numerical value;
deducting the remaining numerical value of the user account, and adding the deducted remaining numerical value to the remaining numerical value of the cloud server; and
setting a numerical value to be processed of the user account as the difference, and setting a processing period for the numerical value to be processed so that the terminal adds the difference into the user account before the processing period expires.

With reference to the first aspect, in a third possible embodiment of the first aspect, acquiring credit information and historical numerical value transfer record of a user based on the user characteristic information and the user account comprises:
acquiring user's identity from a corresponding relation between stored characteristic information and the identity based on the user characteristic information;
acquiring the credit information of the user based on the user's identity; and
acquiring the corresponding historical numerical value transfer record from a stored corresponding relation between the user account and the historical numerical value transfer record.

With reference to the third possible embodiment of the first aspect, in a fourth possible embodiment of the first aspect, acquiring the credit information of the user based on the user's identity comprises:
searching corresponding credit information from a stored corresponding relation between the identity and the credit information based on the user's identity; and
if the corresponding credit information is searched, determining the searched credit information as the credit information of the user.

With reference to the fourth possible embodiment of the first aspect, in a fifth possible embodiment of the first aspect, after searching corresponding credit information from the stored corresponding relation between the identity and the credit information based on the user's identity, the method further comprises:
if no corresponding credit information is searched, sending an information acquiring request to a credit information server, the information acquiring request carrying the user's identity; and
when credit information sent by the credit information server is received, determining the received credit information as the credit information of the user.

According to a second aspect of the embodiments of the present disclosure, there is provided a numerical value transfer method, comprising:
when a numerical value transfer instruction is received, performing image collection to a user currently using a terminal to obtain a target image;
extracting user characteristic information from the target image; and
sending a numerical value transfer request to a cloud server so that the cloud server performs numerical value transfer based on the numerical value transfer request, the numerical value transfer request carrying the user characteristic information, a user account being currently login of the terminal and a target numerical value of the numerical value transfer being currently performed.

According to a third aspect of the embodiments of the present disclosure, there is provided a cloud server, the cloud server comprises:
a receiving module configured to receive a numerical value transfer request sent by a terminal, the numerical value transfer request carrying user characteristic information, a user account being currently login of the terminal and a target numerical value of the numerical value transfer being currently performed, the user characteristic information being obtained by characteristic extraction from a target image in the terminal;
an acquiring module configured to acquire credit information and historical numerical value transfer record of a user based on the user characteristic information and the user account; and
a numerical value transfer module configured to perform numerical value transfer based on the credit information, the historical numerical value transfer record and the target numerical value.

With reference to the third aspect, in a first possible embodiment of the third aspect, the numerical value transfer module comprises:
a determining unit configured to determine a credit amount of the user based on the credit information and the historical numerical value transfer record;
a first acquiring unit configured to acquire at least one frequently used address information from a stored corresponding relation between the user account and the frequently used address information based on the user account;
a sending unit configured to send the at least one frequently used address information to the terminal so that the terminal displays the same; and
a numerical value transfer unit configured to perform numerical value transfer based on the credit amount, a remaining numerical value of the user account, the target numerical value and a remaining numerical value of the cloud server when target address information sent by the terminal based on the at least one frequently used address information is received, the target address information being address information of the numerical value transfer being currently performed.

With reference to the first possible embodiment of the third aspect, in a second possible embodiment of the third aspect, the numerical value transfer unit comprises:
a first deducting subunit configured to, when the remaining numerical value of the user account is greater than or equal to the target numerical value, deduct the target numerical value from the remaining numerical value of the user account, and add the deducted target numerical value to the remaining numerical value of the cloud server;
a determining subunit configured to, when the remaining numerical value of the user account is less than the target numerical value, determine if the credit amount is greater than the target numerical value;
a calculating subunit configured to, when the credit amount is greater than the target numerical value, calculate a difference between the remaining numerical value of the user account and the target numerical value;
a second deducting subunit configured to deduct the remaining numerical value of the user account and add the deducted remaining numerical value to the remaining numerical value of the cloud server; and
a setting subunit configured to set a numerical value to be processed of the user account as the difference and set a processing period for the numerical value to be processed so that the terminal adds the difference into the user account before the processing period expires.

With reference to the third aspect, in a third possible embodiment of the third aspect, the acquiring module comprises:
a second acquiring unit configured to acquire user's identity from a stored corresponding relation between the characteristic information and the identity based on the characteristic information of the user;
a third acquiring unit configured to acquire the credit information of the user based on the user's identity; and
a fourth acquiring unit configured to acquire a corresponding historical numerical value transfer record from the stored corresponding relation between the user account and the historical numerical value transfer record.

With reference to the third possible embodiment of the third aspect, in a fourth possible embodiment of the third aspect, the third acquiring unit comprises:
a searching subunit configured to search corresponding credit information from a stored corresponding relation between the identity and the credit information based on the identity of the user; and
a first determining subunit configured to, if the corresponding credit information is searched, determine the searched credit information as the credit information of the user.

With reference to the fourth possible embodiment of the third aspect, in a fifth possible embodiment of the third aspect, the third acquiring unit further comprises:
a sending subunit configured to, if no corresponding credit information is searched, send an information acquiring request to a credit information server, the information acquiring request carrying the user's identity; and
a second determining subunit configured to, when credit information sent by the credit information server is received, determine the received credit information as the credit information of the user.

According to a fourth aspect of the embodiments of the present disclosure, there is provided a terminal, the terminal comprises:
an image collecting module configured to, when a numerical value transfer instruction is received, perform image collection to a user currently using the terminal to obtain a target image;
an extracting module configured to extract user characteristic information from the target image; and
a first sending module configured to send a numerical value transfer request to a cloud server so that the cloud server performs numerical value transfer based on the numerical value transfer request, the numerical value transfer request carrying the user characteristic information, a user account being currently login of the terminal and a target numerical value of the numerical value transfer being currently performed.

According to a fifth aspect of the embodiments of the present disclosure, there is provided a cloud server, the cloud server comprises:
a processor; and
a memory configured to store an instruction executable by the processor,
wherein the processor is configured to:
receive a numerical value transfer request sent by a terminal, the numerical value transfer request carrying user characteristic information, a user account being currently login of the terminal and a target numerical value of the numerical value transfer being currently performed, the user characteristic information being obtained by characteristic extraction from a target image in the terminal;
acquire credit information and historical numerical value transfer record of a user based on the user characteristic information and the user account; and
perform numerical value transfer based on the credit information, the historical numerical value transfer record and the target numerical value.

According to a sixth aspect of the embodiments of the present disclosure, there is provided a terminal, the terminal comprises:
a processor; and
a memory configured to store an instruction executable by the processor,
wherein the processor is configured to:
when a numerical value transfer instruction is received, perform image collection to a user currently using the terminal to obtain a target image;
extract user characteristic information from the target image; and
send a numerical value transfer request to a cloud server so that the cloud server performs numerical value transfer based on the numerical value transfer request, the numerical value transfer request carrying the user characteristic information, a user account being currently login of the terminal and a target numerical value of the numerical value transfer being currently performed.

In one particular embodiment, the steps of the numerical value transfer method are determined by computer program instructions.

Consequently, according to a seventh aspect, the invention is also directed to a computer program for executing the steps of a numerical value transfer method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this disclosure have the following advantageous effects: in the embodiments of this disclosure, when the terminal receives a numerical value transfer instruction, image collection is performed to the user currently using the terminal to obtain a target image, and by extracting the user characteristic information of the target image, it saves the user from manually inputting account number and password for performing numerical value transfer with easy operations and enhances the security for numerical value transfer. Moreover, since the cloud server performs numerical value transfer by acquiring credit information and historical numerical value transfer record of the user, the security for numerical value transfer is further improved.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a numerical value transfer method according to an exemplary embodiment.
Fig. 2 is a flow chart showing a numerical value transfer method according to an exemplary embodiment.
Fig. 3 is a flow chart showing a numerical value transfer method according to an exemplary embodiment.
FIG. 4 is a block diagram of a cloud server according to an exemplary embodiment.
FIG 5 is a block diagram of a numerical value transfer module according to an exemplary embodiment.
FIG. 6 is a block diagram of a terminal according to an exemplary embodiment.
FIG. 7 is a block diagram of a terminal according to an exemplary embodiment.
FIG. 8 is a block diagram of a cloud server according to an exemplary embodiment.
FIG. 9 is a block diagram of a terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

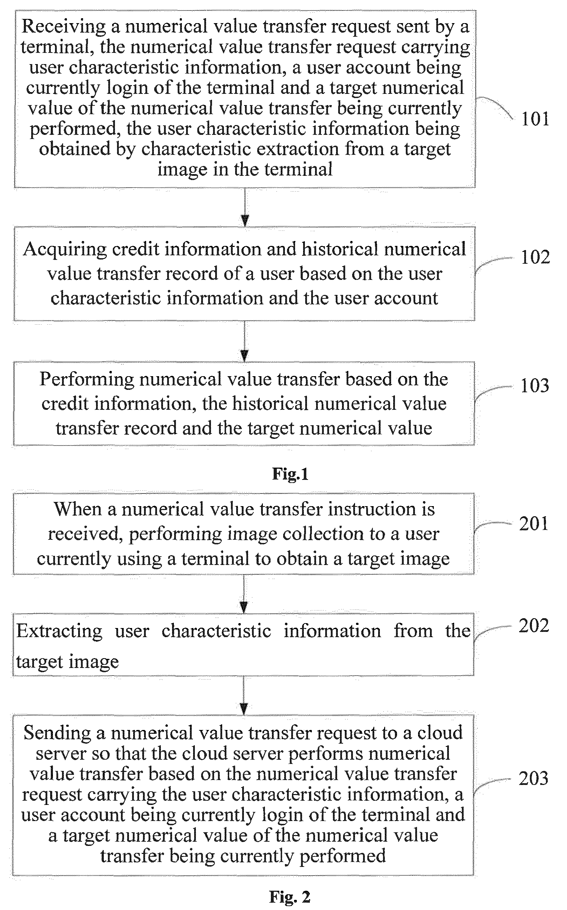

Fig. 1 is a flow chart showing a numerical value transfer method according to an exemplary embodiment. As shown in Figure 1, the numerical value transfer method is used for a cloud server and comprises the following steps:
in step 101, receiving a numerical value transfer request sent by a terminal, the numerical value transfer request carrying user characteristic information, a user account being currently login of the terminal and a target numerical value of the numerical value transfer being currently performed, the user characteristic information being obtained by characteristic extraction from a target image in the terminal;
in step 102, acquiring credit information and historical numerical value transfer record of a user based on the user characteristic information and the user account; and
in step 103, performing numerical value transfer based on the credit information, the historical numerical value transfer record and the target numerical value.

In the embodiment of this disclosure, the terminal extracts the user characteristic information of the target image. Thus, the disclosure saves the user from manually inputting account number and password for performing numerical value transfer with easy operations and enhances the security for numerical value transfer. Moreover, in the cloud server, numerical value transfer is performed by acquiring credit information and historical numerical value transfer record of the user and the account related to performing the numerical value transfer is not involved and the security for numerical value transfer is further improved by the credit degree of the user.

In another embodiment of this disclosure, performing numerical value transfer based on the credit information, the historical numerical value transfer record and the target numerical value comprises:
determining a credit amount of the user based on the credit information and the historical numerical value transfer record;
acquiring at least one frequently used address information from a stored corresponding relation between the user account and the frequently used address information based on the user account;
sending the at least one frequently used address information to the terminal so that the terminal displays the same; and
performing numerical value transfer based on the credit amount of the user, a remaining numerical value of the user account, the target numerical value and a remaining numerical value of a cloud server when target address information sent by the terminal based on the at least one frequently used address information is received, the target address information being address information of the numerical value transfer being currently performed.

In another embodiment of this disclosure, performing numerical value transfer based on the credit amount of the user, the remaining numerical value of the user account, the target numerical value and the remaining numerical value of the cloud server comprises:
when the remaining numerical value of the user account is greater than or equal to the target numerical value, deducting the target numerical value from the remaining numerical value of the user account, and adding the deducted target numerical value to the remaining numerical value of the cloud server;
when the remaining numerical value of the user account is less than the target numerical value, determining if the credit amount of the user is greater than the target numerical value;
when the credit amount of the user is greater than the target numerical value, calculating a difference between the remaining numerical value of the user account and the target numerical value;
deducting the remaining numerical value of the user account, and adding the deducted remaining numerical value to the remaining numerical value of the cloud server; and
setting a numerical value to be processed of the user account as the difference, and setting a processing period for the numerical value to be processed so that the terminal adds the difference into the user account before the processing period expires.

In another embodiment of this disclosure, acquiring credit information and historical numerical value transfer record of a user based on the user characteristic information and the user account comprises:
acquiring user's identity from a stored corresponding relation between the user characteristic information and the identity based on the user characteristic information;
acquiring the credit information of the user based on the user's identity; and
acquiring a corresponding historical numerical value transfer record from a stored corresponding relation between the user account and the historical numerical value transfer record based on the user account.

In another embodiment of this disclosure, acquiring the credit information of the user based on the user's identity comprises:
searching corresponding credit information from a stored corresponding relation between the user's identity and the credit information based on the user's identity; and
if the corresponding credit information is searched, determining the searched credit information as the credit information of the user.

In another embodiment of this disclosure, after searching corresponding credit information from the stored corresponding relation between the user's identity and the credit information based on the user's identity, the method further comprises:
if no corresponding credit information is searched, sending an information acquiring request to a credit information server, the information acquiring request carrying the user's identity; and
when credit information sent by the credit information server is received, determining the received credit information as the credit information of the user.

All the above technical solutions may be combined in any form to form an embodiment of this disclosure, which will not be elaborated herein.

Fig. 2 is a flow chart showing a numerical value transfer method according to an exemplary embodiment. As shown in Figure 2, the numerical value transfer method is used for a terminal and comprises the following steps:
in step 201, when receiving a numerical value transfer instruction, performing image collection to a user currently using the terminal to obtain a target image;
in step 202, extracting user characteristic information from the target image; and
in step 203, sending a numerical value transfer request to a cloud server so that the cloud server performs numerical value transfer based on the numerical value transfer request, the numerical value transfer request carrying the user characteristic information, a user account being currently login of the terminal and a target numerical value of the numerical value transfer being currently performed.

In the embodiments of this disclosure, when the terminal receives a numerical value transfer instruction, image collection is performed to the user using the terminal to obtain a target image, and by extracting the user characteristic information of the target image, this disclosure saves the user from manually inputting account number and password for performing numerical value transfer with easy operations and the security for numerical value transfer is also enhanced.

In another embodiment of this disclosure, after sending the numerical value transfer request to the cloud server, the method further comprises:
receiving at least one frequently used address information sent from the cloud server;
displaying the at least one frequently used address information;
determining target address information based on the at least one frequently used address information, the target address information being address information of the numerical value transfer being currently performed; and
sending the target address information to the cloud server.

In another embodiment of this disclosure, determining the target address information based on the at least one frequently used address information comprises:
when an instruction for selecting a designated frequently used address information from the at least one frequently used address information is received, determining the designated frequently used address information as the target address information; or
when an instruction for selecting is not received but an address information input instruction is received, receiving address information determined by a designation manner of the user, and determining the target address information based on the received address information, the designation manner including voice, remote controller or position locating.

In another embodiment of this disclosure, determining the target address information based on the received address information comprises:
when an address information modification instruction is received, receiving modified address information obtained after the user modifies the received address information; and
determining the modified address information as the target address information.

All the above technical solutions may be combined in any form to form an embodiment of this disclosure, which will not be elaborated herein.

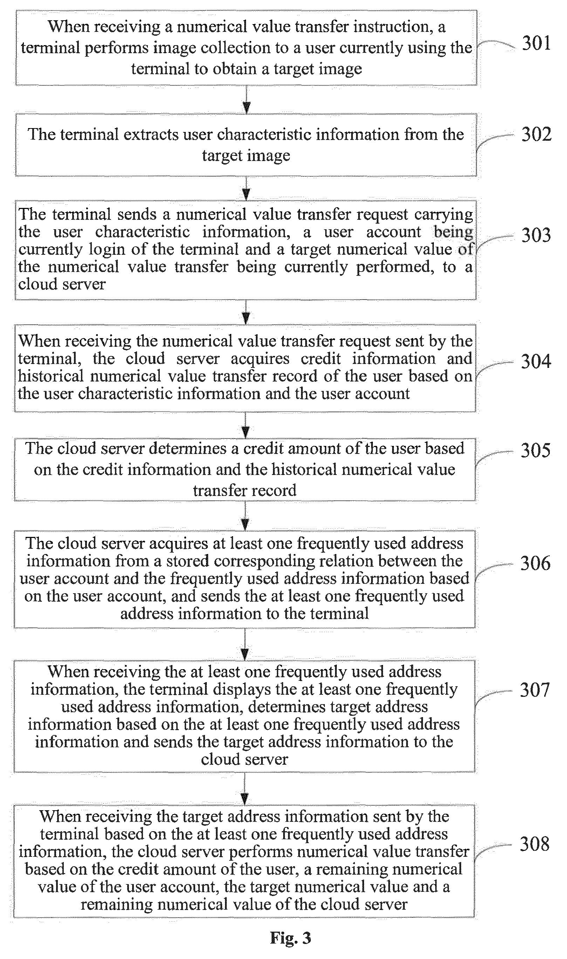

Fig. 3 is a flow chart showing a numerical value transfer method according to an exemplary embodiment. As shown in Figure 3, the numerical value transfer method may comprise the following step:
in step 301, when the terminal receives a numerical value transfer instruction, performing image collection to a user currently using a terminal to obtain a target image.

When the terminal receives a numerical value transfer instruction, the terminal may perform image collection to the user currently using the terminal through an image collection device to obtain a target image. The image collection device may include a camera installed in the terminal, a camera coupled to the terminal, a fingerprint collection device or the like.

In the embodiments of this disclosure, the subject triggering the numerical value transfer instruction may be a user. That is, the user may submit the numerical value transfer instruction to the terminal through a first designation operation which may be a sliding operation, a voice operation, clicking of a numerical value transfer button or the like. The embodiments of this disclosure will not specifically define the first designation operation.

It should be noted that in the embodiments of this disclosure, the terminal may not only be a smart TV, but also be a computer, a cell phone, a PAD, or the like, and it will not be specifically defined in the embodiments of this disclosure.

In step 302, the terminal extracts user characteristic information from the target image.

In the embodiments of this disclosure, the target image may be a human face image of the user using the terminal, or an iris image of the user's eyes or a fingerprint image of the user.

When the target image is a human face image of the user, the terminal may perform human face characteristic extraction to the target image to obtain user characteristic information. In this case, the user characteristic information may include a profile of a human face, or the positions and sizes of the human facial features (the five organs) and the like. The embodiments of this disclosure will not specifically define the user characteristic information.

When the target image is an iris image of the user's eyes, the terminal may perform iris characteristic extraction to the target image to obtain user characteristic information. In this case, the user characteristic information may include a color of the iris, the shape of the iris, the size of the iris and the like. The embodiments of this disclosure will not specifically define the user characteristic information.

When the target image is a fingerprint image of the user, the terminal may perform fingerprint characteristic extraction to the target image to obtain user characteristic information. In this case, the user characteristic information may include a starting point position of the fingerprint, a terminating point position of the fingerprint, an intersection position and the like. The embodiments of this disclosure will not specifically define the user characteristic information.

It should be noted that the methods for performing human face characteristic extraction, iris characteristic extraction and fingerprint characteristic extraction to the target image may refer to the related technologies, and will not be elaborated in the embodiments of this disclosure.

In the embodiments of this disclosure, after the terminal obtains the user characteristic information through the above step, numerical value transfer may be performed in the following manner, which saves the user from inputting account number and password to the terminal for numerical value transfer with easy operations, so that other users may not easily see the account number and the password, thereby enhancing the security for numerical value transfer, particularly for a smart TV usually placed in the living room.

In step 303, the terminal sends a numerical value transfer request carrying the user characteristic information, a user account being currently login of the terminal and a target numerical value of the numerical value transfer being currently performed, to a cloud server.

When obtaining the user characteristic information, the terminal may generate a numerical value transfer request based on the user characteristic information, the user account being currently login of the terminal and the target numerical value of the numerical value transfer being currently performed, and sends the numerical value transfer request to the cloud server.

When the terminal generates the numerical value transfer request, the user characteristic information, the user's account number and the target numerical value may be directly carried by the numerical value transfer request. In another embodiment of this disclosure, the user characteristic information, the user's account number and the target numerical value may be packaged according to a designated manner, and the packaged information may be contained in the numerical value transfer request. For example, a character string may be designated to associate the user characteristic information, the user's account number and the target numerical value in series. For example, if the character string is designated as #, the user characteristic information as Characteristic 1, the user's account number as 122456, and the target numerical value as 60, after the terminal packages the user characteristic information, the user's account number and the target numerical value according to a designated manner, the packaged information is obtained as: Characteristic 1#122456#60.

It should be note that the user account being currently login of the terminal is obtained by that the terminal is registered in the cloud server. That is, the user account being currently login in the terminal may be a communication account.

In step 304, after receiving the numerical value transfer request sent by the terminal, the cloud server acquires credit information and historical numerical value transfer record of the user based on the user characteristic information and the user account.

In order to determine the credit amount of the user to improve the security of numerical value transfer, every time a numerical value transfer is performed, the cloud server may record the user account and the numerical value transfer record of the numerical value transfer and store a corresponding relation between the user account and the historical numerical value transfer record. Then, after receiving the numerical value transfer request sent by the terminal, the cloud server may acquire user's identity from the stored corresponding relation between the characteristic information and the user's identity based on the user characteristic information carried by the numerical value transfer request, acquire the credit information of the user based on the user's identity, and acquire the corresponding historical numerical value transfer record from the stored corresponding relation between the user account and the historical numerical value transfer record based on the user account. The historical numerical value transfer record may include a historical target numerical value, the remaining numerical value of the user account when the historical numerical value transfer is performed, and the like, and will not be specifically defined in the embodiments of this disclosure.

For example, the user characteristic information carried by the numerical value transfer request is characteristic information 1, and the user account is 1654663. After receiving the numerical value transfer request sent by the terminal, the cloud server acquires the user's identity ID1 from the stored corresponding relation between the characteristic information and the user's identity as shown in Table 1 based on the user characteristic information 1 carried by the numerical value transfer request, acquires the user's credit information i.e. credit information 1 based on the user's identity ID1, and acquires the corresponding historical numerical value transfer record i.e. record 1 from the corresponding relation between the user account and the historical numerical value transfer record as shown in Table 2 based on the user account 1654663.

**Table 1**

| Characteristic information | User's Identity |
|---|---|
| Characteristic information 1 | ID1 |
| Characteristic information 2 | ID1 |
| ... | ... |

**Table 2**

| User account | Historical numerical value transfer record |
|---|---|
| 1654663 | Record 1 |
| 1246536 | Record 2 |
| ... | ... |

It should be note that, in the embodiments of this disclosure, the numerical values shown in Table 1 and Table 2 are examples only and do not define the embodiments of this disclosure.

That the cloud sever acquires the credit information of the user based on the user's identity may comprise: searching corresponding credit information from the stored corresponding relation between the user's identity and the credit information based on the user's identity; if the corresponding credit information is searched, determining the searched credit information as the credit information of the user; if no corresponding credit information is searched, sending an information acquiring request carrying the user's identity to a credit information server; when the information acquiring request is received by the credit information server, acquiring the corresponding credit information from the stored corresponding relation between the user's identity and the credit information based on the user's identity, and sending the acquired credit information to the cloud sever; when receiving the credit information sent by the credit information server, the cloud sever determines the received credit information as the credit information of the user.

In the embodiments of this disclosure, when acquiring the credit information of the user from the credit information server for the first time, the cloud sever may store a corresponding relation between the user's identity and the credit information. Thus, when the user performs numerical value transfer afterwards, the cloud sever will not need to acquire the credit information of the user from the credit information server again, which reduces the interaction times between the cloud sever and the credit information server and improves the credit information acquiring efficiency.

Further, the cloud server may acquire the corresponding credit information from the credit information server again based on each user's identity in the stored corresponding relation between the user's identity and the credit information at every other a designated interval to update the stored corresponding relation between the user's identity and the credit information in order to ensure the timeliness and accuracy of the credit information stored in the cloud server. The designated interval may be set in advance and for example may be 3 hours, 1 day or the like, and will not be specifically defined in the embodiments of this disclosure.

It should be noted that the user's identity may be an identification number of the user, and the corresponding relation between the characteristic information and the user's identity may be acquired in advance and stored in the cloud server. In addition, the credit information of the user may include loan information, real estate information, vehicle information, social insurance information, personal income tax information of the user and the like, and will not be specifically defined in the embodiments of this disclosure. The credit information of the user may be used in multiple systems, such as a banking system. Therefore, there are many methods for the cloud server to acquire the credit information of the user based on the user's identity. For example, the cloud server may send an information acquiring request to a server of other system to acquire the credit information of the user from the server of the other system.

In step 305, the cloud server determines a credit amount of the user based on the credit information and the historical numerical value transfer record.

The credit information and the historical numerical value transfer record of the user are used to identify the credit degree of the user. Therefore, in the embodiments of this disclosure, the cloud server can determine a credit amount of the user based on the credit information and the historical numerical value transfer record of the user.

There are many methods for determining a credit amount of the user. For example, numerical value conversion may be performed to the credit information to obtain a credit numerical value; numerical value conversion may be performed to the historical numerical value transfer record to obtain a historical transfer numerical value; corresponding weights can be set in advance respectively for the credit information and for the historical numerical value transfer record; then, a first numerical value is obtained by multiplying the credit numerical value with the weight corresponding to the credit information; a second numerical value is obtained by multiplying the historical transfer numerical value with the weight corresponding to the historical numerical value transfer record; the credit amount of the user is obtained by adding the first numerical value and the second numerical value. For example, a credit numerical value i.e. 500 is obtained by performing numerical value conversion to the credit information; a historical transfer numerical value i.e. 300 is obtained by performing numerical value conversion to the historical numerical value transfer record; the weight corresponding to the credit information is 0.8 and the weight corresponding to the historical numerical value transfer record is 0.2; at this time, a first numerical value i.e. 400 is obtained by multiplying the credit numerical value 500 with the weight corresponding to the credit information i.e. 0.8; a second numerical value i.e. 60 is obtained by multiplying the historical transfer numerical value i.e. 300 with the weight corresponding to the historical numerical value transfer record i.e. 0.2; a credit amount of the user, 460, is obtained by adding the first numerical values i.e. 400 and the second numerical values i.e. 60.

In another example, an average of the credit numerical value and the historical transfer numerical value may be calculated and determined as the credit amount of the user. For example, an average of the credit numerical value i.e. 500 and the historical transfer numerical value i.e. 300 may be calculated as 400 and the average, 400, can be determined as the credit amount of the user.

In another example, each credit information may be divided into multiple credit levels, and each credit level corresponds to a certain credit numerical value; the historical numerical value transfer record is divided into multiple record levels, and each record level corresponds to a certain record numerical value; a credit level of the acquired credit information and a record level of the acquired historical numerical value transfer record may be determined; a credit numerical value corresponding to the credit level of the acquired credit information and a record numerical value corresponding to the record level of the historical numerical value transfer record may be determined; an average of the credit numerical value and the record numerical value may be calculated and determined as the credit amount of the user.

Therefore, the embodiments of this disclosure do not specifically define the methods for determining the credit amount, and the related arts may be referred to.

In step 306, the cloud server acquires at least one frequently used address information from a stored corresponding relation between the user account and the frequently used address information based on the user account, and sends the at least one frequently used address information to the terminal.

In the embodiments of this disclosure, when sending the at least one frequently used address information to the terminal, the cloud server may store the at least one frequently used address information into a frequently used address information table and may send the frequently used address information table to the terminal. When receiving the frequently used address information table, the terminal directly displays the same. In another embodiment of this disclosure, the cloud server may also send the at least one frequently used address information to the terminal directly, so that the terminal displays the same in the form of a table. Of course, other manners may be used for displaying, and will not be specifically defined in the embodiments of this disclosure.

For example, the at least one frequently used address information includes address information 1, address information 2 and address information 3. The three frequently used address information are stored in the address information table as shown in Table 3 and may send to the terminal.

**Table 3**

| Frequently used address information |
|---|
| Address information 1 |
| Address information 2 |
| Address information 3 |

In step 307, when receiving the at least one frequently used address information, the terminal displays the at least one frequently used address information, determines target address information based on the at least one frequently used address information and sends the target address information to the cloud server.

In the embodiments of this disclosure, in order to complete the numerical value transfer, it is necessary to determine the target address information. Therefore, when the terminal receives the at least one frequently used address information and displays the same, the user may select a designated address information from the at least one frequently used address information. When receiving an instruction for selecting the designated frequently used address information from the at least one frequently used address information, the terminal determines the designated frequently used address information as the target address information. Or when receiving the at least one frequently used address information, the terminal displays the same, and when not receiving an instruction for selecting the designated frequently used address information from the at least one frequently used address information but receiving an address information input instruction, the terminal may receive address information determined by a designation manner of the user and determine target address information based on the received address information. The designation manner may include voice, remote controller or position locating.

Determining the target address information based on the received address information may be that the received address information may be determined as the target address information directly. In order to ensure the accuracy of the target address information, when the terminal receives address information determined by a designation manner of the user, the user may modify the received address information. At this time, the user may submit an address information modification instruction to the terminal. When receiving the address information modification instruction, the terminal receives modified address information obtained after the user modifies the received address information and determines the modified address information as the target address information.

For example, when receiving an instruction for selecting address information 2 of the at least one frequently used address information, the terminal determines the address information 2 as the target address information. For example, when the terminal does not receive the instruction for selecting but receives an address information input instruction, the terminal may receive address information i.e. the address information 6 determined by the designation manner of the user, and when the user modifies the address information 6, the user may submit an address information modification instruction to the terminal. When receiving the address information modification instruction, the terminal receives the modified address information i.e. the address information 61 obtained after the user modifies the address information 6, and determines the address information 61 as the target address information.

In the embodiments of this disclosure, determining the target address information based on the at least one frequently used address information may be performed not only through the above two manners, but through other manners. For example, the target address information may be determined by determining a use frequency of the at least one frequently used address information and selecting one frequently used address information the use frequency of which is the highest and determining the target address information based on the selected frequently used address information. Or, frequently used address information the use time of which is the closest to the current time may be selected from the at least one frequently used address information and the target address information is determined based on the selected frequently used address information.

Since the designation manner may include voice, remote controller or position locating, when the designation manner is voice, the terminal may receive address information input by voice of the user. When the designation manner is a remote controller, the terminal may receive address information input through a remote controller of the user. When the designation manner is position locating, the terminal may locate its current position to obtain position information of the terminal and determines the position information of the terminal as the received address information.

It should be noted that the address information modification instruction may be submitted by a second designation operation by the user. The second designation operation may be voice operation, pressing of a designated button of a remote controller, swing of a remote controller etc.. The second designation operation will not be specifically defined in the embodiments of this disclosure.

In step 308, when receiving the target address information sent by the terminal based on the at least one frequently used address information, the cloud server performs numerical value transfer based on the credit amount of the user, a remaining numerical value of the user account, the target numerical value and a remaining numerical value of the cloud server.

When receiving the target address information sent by the terminal based on the at least one frequently used address information, the cloud server compares the remaining numerical value of the user account with the target numerical value. When the remaining numerical value of the user account is greater than or equal to the target numerical value, the cloud server deducts the target numerical value from the remaining numerical value of the user account and adds the deducted target numerical value to the remaining numerical value of the cloud server. When the remaining numerical value of the user account is less than the target numerical value, the cloud server determines if the credit amount of the user is greater than the target numerical value. When the credit amount of the user is greater than the target numerical value, the cloud server calculates a difference between the remaining numerical value of the user account and the target numerical value, deducts the remaining numerical value of the user account, and adds the deducted remaining numerical value to the remaining numerical value of the cloud server, and sets a numerical value to be processed of the user account as the difference and sets a processing period for the numerical value to be processed so that the terminal adds the difference into the user account before the processing period expires.

For example, if the credit amount of the user is 460, the remaining numerical value of the user account is 200, the target numerical value is 350, and the remaining numerical value of the cloud server is 1,000, it is determined that the remaining numerical value of the user account is less than the target numerical value and the credit amount of the user is greater than the target numerical value. Then, a difference between the remaining numerical value 200 of the user account and the target numerical value 350 is calculated as 150. The remaining numerical value 200 of the user account is deducted, and the deducted remaining numerical value 200 of the user account is added to the remaining numerical value 1,000 of the cloud server to obtain 1,200. Then, the numerical value to be processed of the user account is set to be 150, and a processing period of 10 days is set for the numerical value to be processed, so that the terminal adds 150 into the user account within 10 days from the current time.

Further, when the remaining numerical value of the user account is greater than or equal to the target numerical value, the target numerical value may be deducted from the remaining numerical value of the user account directly without considering the credit degree of the user; when the remaining numerical value of the user account is less than the target numerical value, in order to allow the user to complete numerical value transfer, the cloud server needs to pre-pay a part of the numerical value for the user account, and at this time, the credit degree of the user needs to be considered. That is, the credit amount of the user and the target numerical value are compared. When the credit amount of the user is greater than the target numerical value, the cloud server can complete numerical value transfer as usual, provided that the user needs to add the pre-paid amount of the cloud server into the user account before the processing period expires, i.e. needs to add the difference into the user account. After the user adds the difference into the user account through the terminal before the processing period expires, the cloud server may deduct the difference added to the user account, and add the deducted difference to the remaining numerical value of the cloud server so as to repay the numerical value pre-paid by the cloud server, thereby facilitating the convenience of numerical value transfer.

In the embodiments of this disclosure, when receiving a numerical value transfer instruction, the terminal performs image collection to the user using the terminal to obtain a target image; by extracting the user characteristic information of the target image, it saves the user from manually inputting account number and password for performing numerical value transfer with easy operations and the security for numerical value transfer is also enhanced. Moreover, since the cloud server performs numerical value transfer by acquiring credit information and historical numerical value transfer record of the user, the security for numerical value transfer is further improved. Further, the cloud server may also acquire at least one frequently used address information of the user; if the target address information of the numerical value transfer being currently performed is one of the at least one frequently used address information, the user can select the target address information from the at least one frequently used address information directly without input again by other manners, thereby enhancing the convenience and improving the efficiency of numerical value transfer.

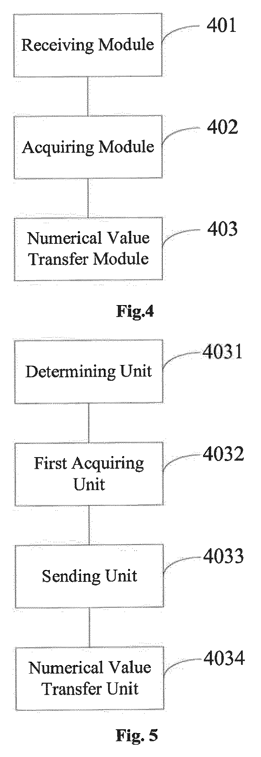

FIG. 4 is a block diagram of a cloud server according to an exemplary embodiment. As shown in Figure 4, the cloud server comprises a receiving module 401, an acquiring module 402 and a numerical value transfer module 403 as below:
a receiving module 401 configured to receive a numerical value transfer request sent by a terminal, the numerical value transfer request carrying user characteristic information, a user account being currently login of the terminal and a target numerical value of the numerical value transfer being currently performed, the user characteristic information being obtained by characteristic extraction from a target image in the terminal;
an acquiring module 402 configured to acquire credit information and historical numerical value transfer record of the user based on the user characteristic information and the user account; and
a numerical value transfer module 403 configured to perform numerical value transfer based on the credit information of the user, the historical numerical value transfer record and the target numerical value.

In another embodiment of this disclosure, referring to Figure 5, the numerical value transfer module 403 comprises:
a determining unit 4031 configured to determine a credit amount of the user based on the credit information and the historical numerical value transfer record of the user;
a first acquiring unit 4032 configured to acquire at least one frequently used address information from a stored corresponding relation between the user account and the frequently used address information based on the user account;
a sending unit 4033 configured to send the at least one frequently used address information to the terminal so that the terminal displays the same; and
a numerical value transfer unit 4034 configured to perform numerical value transfer based on the credit amount of the user, a remaining numerical value of the user account, the target numerical value and a remaining numerical value of the cloud server when target address information sent by the terminal based on the at least one frequently used address information is received, the target address information being address information of the numerical value transfer being currently performed.

In another embodiment of this disclosure, the numerical value transfer unit 4034 comprises:
a first deducting subunit configured to, when the remaining numerical value of the user account is greater than or equal to the target numerical value, deduct the target numerical value from the remaining numerical value of the user account, and add the deducted target numerical value to the remaining numerical value of the cloud server;
a determining subunit configured to, when the remaining numerical value of the user account is less than the target numerical value, determine if the credit amount of the user is greater than the target numerical value;
a calculating subunit configured to, when the credit amount of the user is greater than the target numerical value, calculate a difference between the remaining numerical value of the user account and the target numerical value;
a second deducting subunit configured to deduct the remaining numerical value of the user account and add the deducted remaining numerical value to the remaining numerical value of the cloud server; and
a setting subunit configured to set a numerical value to be processed of the user account as the difference and set a processing period for the numerical value to be processed so that the terminal adds the difference into the user account before the processing period expires.

In another embodiment of this disclosure, the acquiring module 402 comprises:
a second acquiring unit configured to acquire user's identity from a stored corresponding relation between the characteristic information and the user's identity based on the user characteristic information;
a third acquiring unit configured to acquire the credit information of the user based on the user's identity; and
a fourth acquiring unit configured to acquire the corresponding historical numerical value transfer record from the stored corresponding relation between the user account and the historical numerical value transfer record based on the user account.

In another embodiment of this disclosure, the third acquiring unit comprises:
a searching subunit configured to search corresponding credit information from the stored corresponding relation between the user's identity and the credit information based on the user's identity; and
a first determining subunit configured to, if the corresponding credit information is searched, determine the searched credit information as the credit information of the user.

In another embodiment of this disclosure, the third acquiring unit further comprises:
a sending subunit configured to, if no corresponding credit information is searched, send an information acquiring request carrying the user's identity to a credit information server; and
a second determining subunit configured to, when credit information sent by the credit information server is received, determine the received credit information as the credit information of the user.

In the embodiments of this disclosure, by extracting the user characteristic information of the target image, the terminal saves the user from manually inputting account number and password for performing numerical value transfer with easy operations and enhances the security for numerical value transfer. In addition, since the cloud server performs numerical value transfer by acquiring the credit information and the historical numerical value transfer record of the user the account related to performing the numerical value transfer is not involved and the security for numerical value transfer is further improved by the credit degree of the user.

With respect to the terminals in the above embodiments, the specific manners for performing operations in individual modules therein have been described in detail in the embodiments regarding the related methods and will not be elaborated herein.

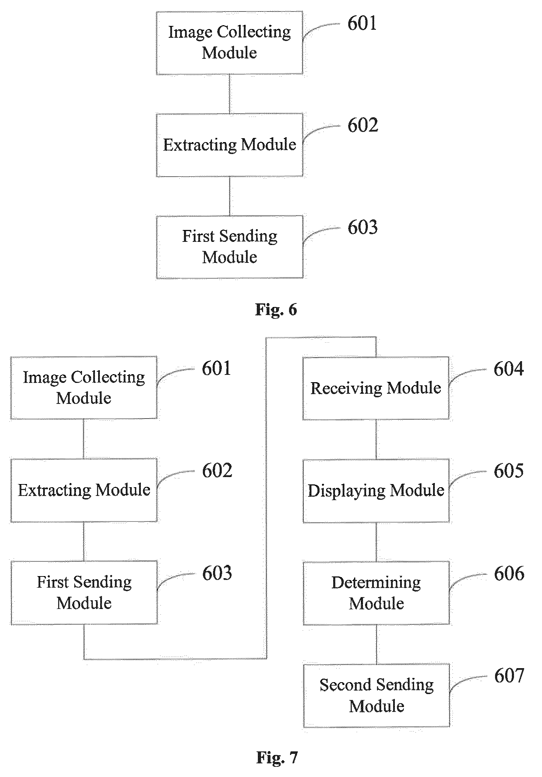

FIG. 6 is a block diagram of a terminal according to an exemplary embodiment. As shown in Figure 6, the terminal comprises an image collecting module 601, an extracting module 602 and a first sending module 603 as below:
an image collecting module 601 configured to, when a numerical value transfer instruction is received, perform image collection to a user currently using the terminal to obtain a target image;
an extracting module 602 configured to extract user characteristic information from the target image; and
a first sending module 603 configured to send a numerical value transfer request to a cloud server so that the cloud server performs numerical value transfer based on the numerical value transfer request carrying the user characteristic information, a user account being currently login of the terminal and a target numerical value of the numerical value transfer being currently performed.

In another embodiment of this disclosure, referring to Figure 7, the terminal further comprises:
a receiving module 604 configured to receive at least one frequently used address information sent by the cloud server;
a displaying module 605 configured to display the at least one frequently used address information;
a determining module 606 configured to determine the target address information based on the at least one frequently used address information, the target address information being address information of the numerical value transfer being currently performed; and
a second sending module 607 configured to send the target address information to the cloud server.

In another embodiment of this disclosure, the determining module 606 comprises:
a first determining subunit configured to, when an instruction for selecting a designated frequently used address information from the at least one frequently used address information is received, determine the designated frequently used address information as the target address information; or
a second determining subunit configured to, when an instruction for selecting is not received but an address information input instruction is received, receive address information determined by a designation manner of the user, and determine the target address information based on the received address information, the designation manner including voice, remote controller or position locating.

In another embodiment of this disclosure, the second determining subunit is specifically configured to:
when an instruction for selecting is not received but the address information input instruction is received, receive address information determined by a designation manner of the user;
when an address information modification instruction is received, receive modified address information obtained after the user modifies the received address information; and
determine the modified address information as the target address information.

In the embodiments of this disclosure, when receiving a numerical value transfer instruction, the terminal performs image collection to the user currently using the terminal to obtain a target image and by extracting the user characteristic information of the target image, it saves the user from manually inputting account number and password for performing numerical value transfer with easy operations and enhances the security for numerical value transfer.

With respect to the terminals in the above embodiments, the specific manners for performing operations in individual modules therein have been described in detail in the embodiments regarding the related methods and will not be elaborated herein.

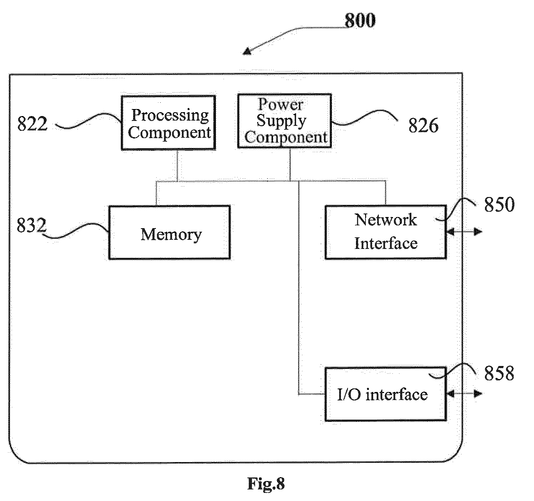

FIG. 8 is a block diagram of a cloud server 800 used for numerical value transfer according to an exemplary embodiment. Referring to FIG. 8, the cloud server 800 includes: a processing component 822 which further comprises one or more processors, and memory resources represented by a memory 832 for storing instructions executable by the processing component 822, such as applications. The applications stored in the memory 832 may include one or more modules each of which corresponding to a group of instructions. In addition, the processing component 822 is configured to execute instructions to execute the following numerical value transfer method, comprising:
receiving a numerical value transfer request sent by a terminal, the numerical value transfer request carrying user characteristic information, a user account being currently login of the terminal and a target numerical value of the numerical value transfer being currently performed, the user characteristic information being obtained by characteristic extraction from a target image in the terminal;
acquiring credit information and historical numerical value transfer record of a user based on the user characteristic information and the user account; and
performing numerical value transfer based on the credit information, the historical numerical value transfer record and the target numerical value.

In another embodiment of this disclosure, performing numerical value transfer based on the credit information, the historical numerical value transfer record and the target numerical value comprises:
determining a credit amount of the user based on the credit information and the historical numerical value transfer record;
acquiring at least one frequently used address information from a stored corresponding relation between the user account and the frequently used address information based on the user account;
sending the at least one frequently used address information to the terminal so that the terminal displays the same; and
performing numerical value transfer based on the credit amount of the user, a remaining numerical value of the user account, the target numerical value and a remaining numerical value of a cloud server when target address information sent by the terminal based on the at least one frequently used address information is received, the target address information being address information of the numerical value transfer being currently performed.

In another embodiment of this disclosure, performing numerical value transfer based on the credit amount of the user, the remaining numerical value of the user account, the target numerical value and the remaining numerical value of the cloud server comprises:
when the remaining numerical value of the user account is greater than or equal to the target numerical value, deducting the target numerical value from the remaining numerical value of the user account, and adding the deducted target numerical value to the remaining numerical value of the cloud server;
when the remaining numerical value of the user account is less than the target numerical value, determining if the credit amount of the user is greater than the target numerical value;
when the credit amount of the user is greater than the target numerical value, calculating a difference between the remaining numerical value of the user account and the target numerical value;
deducting the remaining numerical value of the user account, and adding the deducted remaining numerical value to the remaining numerical value of the cloud server; and
setting a numerical value to be processed of the user account as the difference, and setting a processing period for the numerical value to be processed so that the terminal adds the difference into the user account before the processing period expires.

In another embodiment of this disclosure, acquiring credit information and historical numerical value transfer record of a user based on the user characteristic information and the user account comprises:
acquiring user's identity from a stored corresponding relation between the characteristic information and the user's identity based on the user characteristic information;
acquiring the credit information of the user based on the user's identity; and
acquiring the corresponding historical numerical value transfer record from the stored corresponding relation between the user account and the historical numerical value transfer record based on the user account.

In another embodiment of this disclosure, acquiring the credit information of the user based on the user's identity comprises:
searching corresponding credit information from the stored corresponding relation between the user's identity and the credit information based on the user's identity; and
if the corresponding credit information is searched, determining the searched credit information as the credit information of the user.

In another embodiment of this disclosure, after searching corresponding credit information from the stored corresponding relation between the user's identity and the credit information based on the user's identity, the method further comprises:
if no corresponding credit information is searched, sending an information acquiring request carrying the user's identity to a credit information server; and
when credit information sent by the credit information server is received, determining the received credit information as the credit information of the user.

The cloud server 800 may further include a power supply component 826 configured to perform power supply management of the cloud server 800, a wired or wireless network interface 850 configured to connect the cloud server 800 to a network, and an input and output (I/O) interface 858. The cloud server 800 may be operated based on an operating system stored in the memory 832, such as Windows ServerTM, Mac OS XTM, UnixTM, LinuxTM, FreeBSDTM or the like.

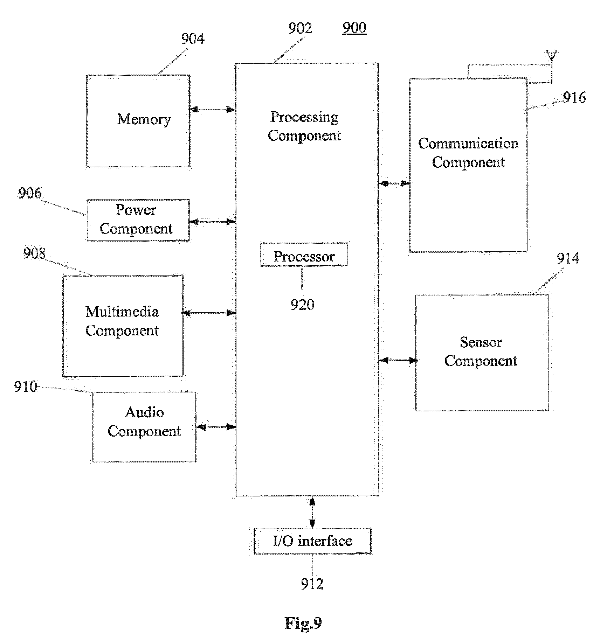

FIG. 9 is a block diagram of a terminal 900 used for numerical value transfer according to an exemplary embodiment. For example, the terminal 900 may be a mobile phone, a computer, a digital broadcast terminal, a messaging device, a gaming console, a tablet, a medical device, a fitness equipment, a personal digital assistant or the like.

Referring to Fig. 9, the terminal 900 may include one or more of the following components: a processing component 902, a memory 904, a power supply component 906, a multimedia component 908, an audio component 910, an input/output (I/O) interface 912, a sensor component 914, and a communication component 916.

The processing component 902 typically controls overall operations of the terminal 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the terminal 900. Examples of such data include instructions for any applications or methods operated on the terminal 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the terminal 900. The power component 906 may include a power supply management system, one or more power sources, and any other components associated with the generation, management, and distribution of power in the terminal 900.

The multimedia component 908 includes a screen providing an output interface between the terminal 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the terminal 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the terminal 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the terminal 900. For instance, the sensor component 914 may detect an open/closed status of the terminal 900, relative positioning of components, e.g., the display and the keypad, of the terminal 900, a change in position of the terminal 900 or a component of the terminal 900, a presence or absence of user contact with the terminal 900, an orientation or an acceleration/deceleration of the terminal 900, and a change in temperature of the terminal 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the terminal 900 and other devices. The terminal 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the terminal 900, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium, wherein when an instruction stored in the storage medium is executed by a processor of a terminal, the terminal is capable of executing a numerical value transfer method, the method comprises:
when a numerical value transfer instruction is received, performing image collection to a user currently using the terminal to obtain a target image;
extracting user characteristic information from the target image; and
sending a numerical value transfer request to a cloud server so that the cloud server performs numerical value transfer based on the numerical value transfer request carrying the user characteristic information, a user account being currently login of the terminal and a target numerical value of the numerical value transfer being currently performed.

In another embodiment of this disclosure, after sending the numerical value transfer request to a cloud server, the method further comprises:
receiving at least one frequently used address information sent from the cloud server;
displaying the at least one frequently used address information;
determining target address information based on the at least one frequently used address information, the target address information being address information of the numerical value transfer being currently performed; and
sending the target address information to the cloud server.

In another embodiment of this disclosure, determining the target address information based on the at least one frequently used address information comprises:
when an instruction for selecting a designated frequently used address information from the at least one frequently used address information is received, determining the designated frequently used address information as the target address information; or
when an instruction for selecting is not received but an address information input instruction is received, receiving address information determined by a designation manner of the user, and determining the target address information based on the received address information, the designation manner including voice, remote controller or position locating.

In another embodiment of this disclosure, determining the target address information based on the received address information comprises:
when an address information modification instruction is received, receiving modified address information obtained after the user modifies the received address information; and
determining the modified address information as the target address information.

In the embodiments of this disclosure, when receiving a numerical value transfer instruction, the terminal performs image collection to the user currently using the terminal to obtain a target image, and by extracting the user characteristic information of the target image, it saves the user from manually inputting account number and password for performing numerical value transfer with easy operations and enhances the security for numerical value transfer.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A numerical value transfer method, being **characterized by** comprising:
Receiving (101) a numerical value transfer request sent by a terminal, the numerical value transfer request carrying user characteristic information, a user account to which a terminal is currently logged in and a target numerical value of the numerical value transfer being currently performed, the user characteristic information being obtained by characteristic extraction from a target image in the terminal;
acquiring (102) credit information and historical numerical value transfer record of a user based on the user characteristic information and the user account; and
performing (103) numerical value transfer based on the credit information, the historical numerical value transfer record and the target numerical value.

2. The method according to claim 1, **characterized in that** performing numerical value transfer based on the credit information, the historical numerical value transfer record and the target numerical value comprises:
determining (305) a credit amount of the user based on the credit information and the historical numerical value transfer record;
acquiring (306) at least one frequently used address information from a stored corresponding relation between the user account and the frequently used address information based on the user account;
sending (306) the at least one frequently used address information to the terminal so that the terminal displays the same; and
performing (308) numerical value transfer based on the credit amount, a remaining numerical value of the user account, the target numerical value and a remaining numerical value of a cloud server when target address information sent by the terminal based on the at least one frequently used address information is received, the target address information being address information of the numerical value transfer being currently performed.

3. The method according to claim 2, **characterized in that** performing numerical value transfer based on the credit amount, the remaining numerical value of the user account, the target numerical value and the remaining numerical value of the cloud server comprises:
when the remaining numerical value of the user account is greater than or equal to the target numerical value, deducting the target numerical value from the remaining numerical value of the user account, and adding the deducted target numerical value to the remaining numerical value of the cloud server;
when the remaining numerical value of the user account is less than the target numerical value, determining if the credit amount is greater than the target numerical value;
when the credit amount is greater than the target numerical value, calculating a difference between the remaining numerical value of the user account and the target numerical value;
deducting the remaining numerical value of the user account, and adding the deducted remaining numerical value to the remaining numerical value of the cloud server; and
setting a numerical value to be processed of the user account as the difference, and setting a processing period for the numerical value to be processed so that the terminal adds the difference into the user account before the processing period expires.

4. The method according to claim 1, **characterized in that** acquiring credit information and historical numerical value transfer record of a user based on the user characteristic information and the user account comprises:
acquiring user's identity from a stored corresponding relation between the user characteristic information and the user's identity based on the user characteristic information;
acquiring the credit information of the user based on the user's identity; and
acquiring the corresponding historical numerical value transfer record from the stored corresponding relation between the user account and the historical numerical value transfer record based on the user account.

5. The method according to claim 4, **characterized in that** acquiring the credit information of the user based on the user's identity comprises:
searching corresponding credit information from the stored corresponding relation between the user's identity and the credit information based on the user's identity; and
if the corresponding credit information is searched, determining the searched credit information as the credit information of the user.

6. The method according to claim 5, **characterized in that** after searching corresponding credit information from the stored corresponding relation between the user's identity and the credit information based on the user's identity, the method further comprises:
if no corresponding credit information is searched, sending an information acquiring request carrying the user's identity to a credit information server; and
when credit information sent by the credit information server is received, determining the received credit information as the credit information of the user.

7. A numerical value transfer method, being **characterized by** comprising:
when a numerical value transfer instruction is received (201), performing image collection to a user currently using a terminal to obtain a target image;
extracting (202) user characteristic information from the target image; and
sending (203) a numerical value transfer request to a cloud server so that the cloud server performs numerical value transfer based on the numerical value transfer request, the numerical value transfer request carrying the user characteristic information, a user account being currently login of the terminal and a target numerical value of the numerical value transfer being currently performed.

8. A cloud server, being **characterized by** comprising:
a receiving module (401) configured to receive a numerical value transfer request sent by a terminal, the numerical value transfer request carrying user characteristic information, a user account being currently login of the terminal and a target numerical value of the numerical value transfer being currently performed, the user characteristic information being obtained by characteristic extraction from a target image in the terminal;
an acquiring module (402) configured to acquire credit information and historical numerical value transfer record of a user based on the user characteristic information and the user account; and
a numerical value transfer module (403) configured to perform numerical value transfer based on the credit information, the historical numerical value transfer record and the target numerical value.

9. The cloud server according to claim 8, **characterized in that** the numerical value transfer module comprises:
a determining unit (4031) configured to determine a credit amount of the user based on the credit information and the historical numerical value transfer record;
a first acquiring unit (4032) configured to acquire at least one frequently used address information from a stored corresponding relation between the user account and the frequently used address information based on the user account;
a sending unit (4033) configured to send the at least one frequently used address information to the terminal so that the terminal displays the same; and
a numerical value transfer unit (4034) configured to perform numerical value transfer based on the credit amount, a remaining numerical value of the user account, the target numerical value and a remaining numerical value of the cloud server when target address information sent by the terminal based on the at least one frequently used address information is received, the target address information being address information of the numerical value transfer being currently performed.

10. The cloud server according to claim 9, **characterized in that** the numerical value transfer unit comprises:
a first deducting subunit configured to, when the remaining numerical value of the user account is greater than or equal to the target numerical value, deduct the target numerical value from the remaining numerical value of the user account, and add the deducted target numerical value to the remaining numerical value of the cloud server;
a determining subunit configured to, when the remaining numerical value of the user account is less than the target numerical value, determine if the credit amount is greater than the target numerical value;
a calculating subunit configured to, when the credit amount is greater than the target numerical value, calculate a difference between the remaining numerical value of the user account and the target numerical value;
a second deducting subunit configured to deduct the remaining numerical value of the user account and add the deducted remaining numerical value to the remaining numerical value of the cloud server; and
a setting subunit configured to set a numerical value to be processed of the user account as the difference and set a processing period for the numerical value to be processed so that the terminal adds the difference into the user account before the processing period expires.

11. The cloud server according to claim 8, **characterized in that** the acquiring module comprises:
a second acquiring unit configured to acquire user's identity from a stored corresponding relation between the characteristic information and the user's identity based on the user characteristic information;
a third acquiring unit configured to acquire the credit information of the user based on the user's identity; and
a fourth acquiring unit configured to acquire the corresponding historical numerical value transfer record from the stored corresponding relation between the user account and the historical numerical value transfer record based on the user account.

12. The cloud server according to claim 11, **characterized in that** the third acquiring unit comprises:
a searching subunit configured to search corresponding credit information from the stored corresponding relation between the user's identity and the credit information based on the user's identity; and
a first determining subunit configured to, if the corresponding credit information is searched, determine the searched credit information as the credit information of the user;
a sending subunit configured to, if no corresponding credit information is searched, send an information acquiring request carrying the user's identity to a credit information server; and
a second determining subunit configured to, when credit information sent by the credit information server is received, determine the received credit information as the credit information of the user.

13. A terminal, being **characterized by** comprising:
an image collecting module (601) configured to, when a numerical value transfer instruction is received, perform image collection to a user currently using the terminal to obtain a target image;
an extracting module (602) configured to extract user characteristic information from the target image; and
a first sending module (603) configured to send a numerical value transfer request to a cloud server so that the cloud server performs numerical value transfer based on the numerical value transfer request, the numerical value transfer request carrying the user characteristic information, a user account being currently login of the terminal and a target numerical value of the numerical value transfer being currently performed.

14. A computer program including instructions for executing the steps of a numerical value transfer method according to claim 1 when said program is executed by a computer.

15. A recording medium readable by a computer and having recorded thereon a computer program including instructions for executing the steps of a numerical value transfer method according to any one of claims 1 to 6.
